# EUROPÄISCHE PATENTSCHRIFT

(11) **EP 1 318 206 B1**
(45) Veröffentlichungstag und Bekanntmachung des Hinweises auf die Patenterteilung: **27.04.2005**
(21) Anmeldenummer: 02025888.5
(22) Anmeldetag: 20.11.2002
(51) Int. Cl.: C23C 8/16, F16C 33/04, C23C 14/08, C23C 16/40

(54) **Verwendung einer Kupfer-Aluminium-Legierung mit definierten Deckschichten als Lagerwerkstoff zur Herstellung von verschleissfesten Gleitlagern**
Use of a copper-aluminium alloy with defined coatings as bearings material for the fabrication of wear resistant sliding bearings
Utilisation d'un alliage de cuivre et d'aluminium muni de revêtements définis comme matériau pour paliers afin de fabriquer des paliers à glissement résistants à l'usure

(30) Priorität: 06.12.2001 DE 10159949
(43) Veröffentlichungstag der Anmeldung: 11.06.2003
(73) Patentinhaber: Wieland-Werke AG, 89070 Ulm (DE)
(72) Erfinder: Ohla, Klaus Dr., 89171 Illerkirchberg (DE); Scharf, Michael, 89165 Dietenheim (DE)

(56) Entgegenhaltungen:
- EP-A- 0 167 102
- DE-A- 19 946 018
- US-A- 5 174 012
- PATENT ABSTRACTS OF JAPAN vol. 009, no. 091 (C-277), 19. April 1985 (1985-04-19) & JP 59 222585 A (NIPPON GENSHIRYOKU KENKYUSHO;OTHERS: 01), 14. Dezember 1984 (1984-12-14)
- PATENT ABSTRACTS OF JAPAN vol. 009, no. 139 (M-387), 14. Juni 1985 (1985-06-14) & JP 60 019972 A (TAIHOU KOGYO KK;OTHERS: 01), 1. Februar 1985 (1985-02-01)
- PATENT ABSTRACTS OF JAPAN vol. 017, no. 027 (M-1355), 19. Januar 1993 (1993-01-19) & JP 04 250995 A (DAIDO STEEL CO LTD), 7. September 1992 (1992-09-07)
- REYBET DEGAT P ET AL: "Effect of chromic acid anodizing treatment on fretting behaviour during fretting tests on pre-stressed specimens" THIN SOLID FILMS, ELSEVIER-SEQUOIA S.A. LAUSANNE, CH, Bd. 298, Nr. 1-2, 20. April 1997 (1997-04-20), Seiten 170-176, XP004125936 ISSN: 0040-6090
- PATENT ABSTRACTS OF JAPAN vol. 1997, no. 02, 28. Februar 1997 (1997-02-28) & JP 08 261184 A (HITACHI LTD), 8. Oktober 1996 (1996-10-08)
- PATENT ABSTRACTS OF JAPAN vol. 015, no. 086 (E-1039), 28. Februar 1991 (1991-02-28) & JP 02 301909 A (SUMITOMO ELECTRIC IND LTD), 14. Dezember 1990 (1990-12-14)

## Beschreibung

Die Erfindung betrifft die Verwendung nach Anspruch 1.

Die im Automobilbau eingesetzten Lagerwerkstoffe zeichnen sich durch eine Kombination verschiedener, günstiger Eigenschaften aus.

Hierzu zählen
- Hoher Elastizitätsmodul
- Niedriger Reibungskoeffizient
- Gute Notlaufeigenschaften
- Gute Korrosionseigenschaften
- Hohe Festigkeit

Trotzdem entstehen durch Verschleiß jährlich Schäden in Milliardenhöhe. Diesen zu verhindern, ist daher eine wichtige Aufgabe.

Bei Lagerwerkstoffen wirkt sich die Trennung der Laufpartner durch Zwischenschichten, z.B. Triboreaktionsschichten, im Allgemeinen verschleißmindernd aus. Die Bildung der Reaktionsschichten verläuft jedoch fast ausschließlich undefiniert und wird durch das Zusammenwirken von Druck, Temperatur, Schmierstoff und der chemischen Reaktion der Laufpartner im Einsatz bestimmt.

Erheblicher Verschleiß lässt sich während der sog. Einlaufphase nachweisen. Aus diesem Grund wäre es wichtig, vor dem Ersteinsatz einen definierten Verschleißschutz aufzubringen.

Derartige Schichten sind beispielsweise aus der Druckschrift JP 60 019 972 A für Taumelscheiben bei Kompressoren bekannt. Dabei wird mittels der anodischen Oxidation eine harte Oberflächenschicht ausgebildet. Beispielsweise werden bei Aluminium bzw. Aluminiumlegierungen Oxidschichten von 5 µm ausgebildet.

Des Weiteren ist aus der Druckschrift JP 59 222 585 A ein Verfahren zur Herstellung von Oxidschichten auf hochtemperaturbeständigem Metall bekannt. Dabei wird mittels einer Glühung bei hohen Temperaturen die Oberfläche des Metalls einer Sauerstoff/Wasserstoff-Atmosphäre ausgesetzt und die Oxidschicht gebildet.

Der Erfindung liegt daher die Aufgabe zugrunde, verschleißmindernde Schichten definiert auf Gleitlager aufzubringen.

Die Aufgabe wird erfindungsgemäß durch die Verwendung einer aluminiumhaltigen Kupferlegierung nach Anspruch 1 gelöst, die aus 0,01 bis 20 % Aluminium, wahlweise einem oder mehreren Elementen aus der Gruppe Eisen, Kobalt, Mangan, Nickel, Silizium, Zinn bis insgesamt maximal 20 %, wahlweise bis 45 % Zink, Rest Kupfer und üblichen Verunreinigungen besteht und die eine dünne, ausschließlich aus Aluminiumoxid bestehende Deckschicht der Dicke D aufweist (die Prozentangabe bezieht sich auf das Gewicht).

Es hat sich herausgestellt, dass Aluminiumoxidschichten den Verschleiß deutlich reduzieren (Ausbildung sog. Tribooxidationsschichten), wie insbes. das Ausführungsbeispiel zeigt. Die Schichten sind dadurch gekennzeichnet, dass sie extrem hart und reaktionsträge gegenüber äußeren Einflüssen sind. Die Oxidationsschichtdicke liegt häufig im Bereich weniger Nanometer (mehrere Atomlagen) was sich an bunt schimmemden "Anlaufschichten" bemerkbar macht. Dabei wird Licht, welches die Schichten passiert, je nach Blickwinkel, durch unterschiedliche, charakteristische Wellenlängen reflektiert. Beim Überschreiten einer Grenzschichtdicke verschwindet dieser Effekt wieder und die Oberflächenfarbe wird durch das Oxid bestimmt.

Obwohl Oxide allgemein sehr spröde sind und durch äußere Krafteinwirkung aufbrechen oder abplatzen, besitzen Anlaufschichten ein hohes Haftungsvermögen. Man geht davon aus, dass zwei unterschiedliche Strukturen (Metall/Oxid) versuchen, kohärente oder zumindest semikohärente Grenzflächen zu bilden (Frank van der Merwe Mechanismus). Es werden sich jeweils die Kristallebenen gegenüberstehen, die ähnliche Symmetrie und Gittermetrik, also eine Epitaxie aufweisen.

Epitaktische Grenzflächen sind die mit der minimalsten möglichen Energie und bedingen ein Maximum an Keimen, die mit eben dieser Epitaxie ausgestattet sind. Da aber Substrat (Metall) und Gast (Oxid) nicht perfekt aufeinander passen, wird diese Fehlpassung durch elastische Verzerrungen und, falls das nicht ausreicht, durch Einbau von Grenzflächenversetzungen ausgeglichen, wobei die Grenzfläche ein energetisches Minimum anstrebt. Mit wachsender Fehlpassung sowie wachsender lateraler Ausdehnung und Dicke der Gastkeime nimmt die Versetzungsdichte derart zu, dass sie instabil wird. Der Zusammenhalt (die Haftung) geht verloren.
Aluminiumoxidschichten haben eine hohe thermodynamische Stabilität bei gleichzeitig kleinen Diffusionskoeffizienten für lonen. Aluminiumoxidschichten werden sich daher auch in Atmosphären mit sehr niedrigem Sauerstoffpartialdruck bilden und stabil bleiben. Aufgrund der o.a. lateralen Wachstumsspannungen neigen jedoch Al₂O₃-Schichten auch unter isothermen Bedingungen zum Abplatzen und zur Riß- und Porenbildung. Grund hierfür ist der parallel, aber gegenläufige Massentransport von Sauerstoff- und Metallionen im Oxid. Es bildet sich Oxid innerhalb der Oxidschichten auf Korngrenzen. Die resultierenden Druckspannungen reichen z.B. aus, einseitig oxidierte Bleche zu verbiegen. Beim Übertritt von Aluminiumionen in das Oxid kommt es außerdem zu einer Leerstelleninjektion im Metall. Die Leerstellen kondensieren an der Phasengrenze Metall/Oxid und bilden Poren.
Eine dünne Aluminiumoxidschicht (Anlaufschicht) stellt einen Kompromiß aus guter Haftfestigkeit und den angegebenen Problemen dar.

In Praxis lassen sich zwar gezielt Oxidationsschichten durch entsprechende Wärmebehandlungen an Luft oder sonstigen sauerstoffhaltigen Atmosphären erzeugen, die Schutzwirkung wird jedoch durch
- Die Bildung mehrerer thermodynamisch stabiler Oxide bei Legierungen mit unterschiedlichen Ausdehnungskoeffizienten
- Mischoxide (Spinelle) mit häufig hohem Fehlordnungsgrad und entsprechend hohem Diffusionskoeffizienten
reduziert.

Die Bildung von reinen Oxidschichten bei Legierungen ist abhängig von der Temperatur und dem jeweiligen Bildungsdruck. Da Al₂O₃ einen vergleichbar extrem niedrigen Bildungsdruck besitzt, ist die ausschließliche Bildung von Aluminiumoxid möglich.

Die Ansprüche 2 bis 8 betreffen besondere Ausführungsformen der Erfindung.

Die aluminiumhaltige Kupferlegierung wird gezielt in einer Gasatmosphäre mit geringem Sauerstoffpartialdruck geglüht. Dabei muss der Sauerstoffpartialdruck so gewählt werden, dass neben Al₂O₃ kein weiteres Oxid gebildet wird. Derartige Bedingungen erfüllt "technischer Wasserstoff". Dieser ist in der Regel mit wenigen ppm (= parts per million) Restsauerstoff bzw. Restfeuchte verunreinigt. Bei Glühtemperatur bildet sich zwischen dem Wasserstoff und dem (Rest-)Sauerstoff bzw. dem Wasserstoff und der Restfeuchte (=Wasser) ein thermodynamisches Gleichgewicht aus, welches durch einen extrem niedrigen Sauerstoffpartialdruck gekennzeichnet ist. Dieser Sauerstoffpartialdruck reicht aus, reines Aluminiumoxid zu bilden. Die anderen Legierungskomponenten werden nicht oxidiert. Spinelle (zusammengesetzte Oxide) sind ebenfalls unter diesen Bedingungen thermodynamisch instabil.

Durch geeignete Wahl der Reaktionsbedingungen (Temperatur T und Zeit) werden Aluminiumoxidschichten mit Schichtdicken von wenigen Nanometern gebildet. Diese Deckschichten verhalten sich pseudoduktil und haben ein sehr hohes Haftvermögen. Die Glühung unter definierten Bedingungen führt zu einem gleichmäßigen Deckschichtaufbau der sich gut reproduzieren lässt.
Damit wird die Aufgabe der reproduzierbaren Erzeugung einer verschleißmindemden Schicht auf Gleitlagern erfüllt.

Die Bildung dünner Oxidschichten in aluminiumhaltigen Kupferlegierungen ist bereits aus DE-OS 4.417.455 bekannt. Im Gegensatz zum dort beschriebenen Verfahren wird hier eine geschlossene Deckschicht durch Einstellung geeigneter Reaktionsparameter beschrieben.

Die Erfindung wird anhand des folgenden Ausführungsbeispiels näher erläutert:

Die Untersuchungen über praktische Auswirkungen der Reaktionsschichten wurden auf einem Gleitlagerprüfstand durchgeführt, in dem das Gleitlager oszillierend zu einer feststehenden Welle bewegt wird. Über einen Hebelmechanismus kann über diese Welle eine einstellbare Belastungskraft in das zu prüfende Gleitlager geleitet werden (vgl. beispielsweise den WIELAND-Prospekt: "Gleitelemente", Ausgabe 6/97, insbes. S.5).

Im vorliegenden Fall betrugt die Belastung 17 N/mm². Es erfolgten 100 Wechsel/Minute bei einem Schwenkwinkel von ± 30° und Initialschmierung mit Fett.

Als Kriterium für die Wirksamkeit der Reaktionsschicht wurde das Einlaufverhalten des Lagers herangezogen wie es beispielhaft durch als Reibwertverlauf über der Zeit anfällt (vgl. beispielsweise Dubbel: "Taschenbuch für den Maschinenbau" (20.Auflage/2001), insbes. S. E86/E87).

Gegenüber unbehandelten Lagern zeigen sich folgende Verbesserungen:
- der Reibwert beginnt auf einem niedereren Niveau,
- die Einlaufzeit ist kürzer,
- es kommt nicht zum üblichen Anstieg des Reibwertes, sondern er fällt sofort ab,
- stabiler Reibwertverlauf

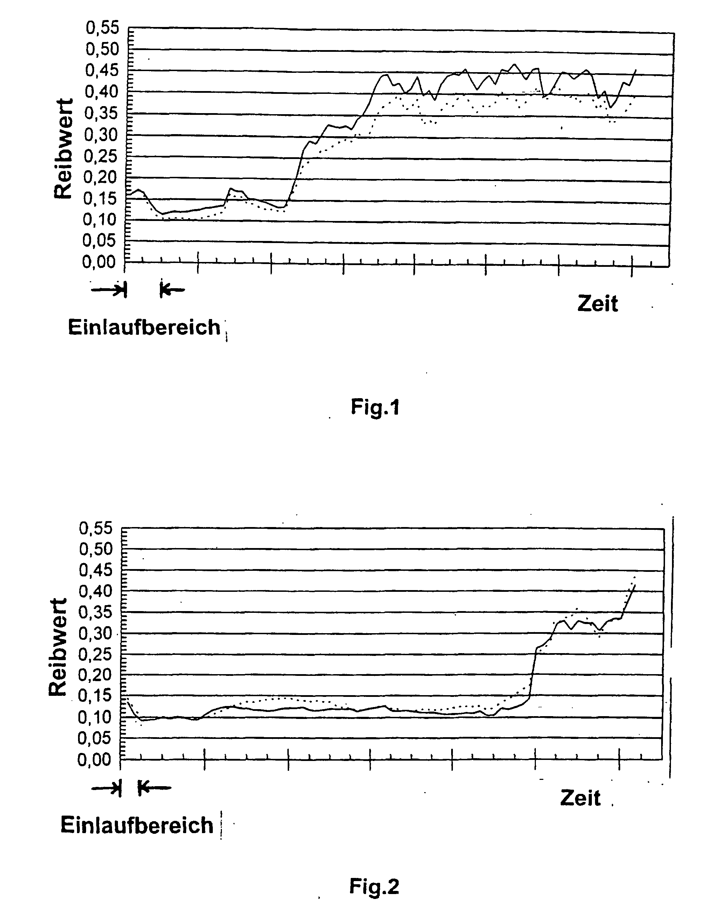

Den Reibwertverlauf einer unbehandelten und einer Buchse mit Reaktions- bzw. Deckschicht zeigen die Figuren 1 und 2. Die Zusammensetzung beträgt in beiden Fällen: CuAl10.

## Patentansprüche

1. Verwendung einer Kupfer-Aluminium-Legierung, bestehend aus 0,01 bis 20 % Aluminium, wahlweise einem oder mehreren Elementen aus der Gruppe Eisen, Kobalt, Mangan, Nickel, Silizium, Zinn bis insgesamt maximal 20 %, wahlweise bis 45% Zink, Rest Kupfer und üblichen Verunreinigungen, die eine äußere, mittels Glühung bei 400 bis 800°C in einer Gasatmosphäre mit geringem Sauerstoffpartialdruck erzeugte dünne Deckschicht der Dicke D aufweist, die ausschließlich aus Aluminiumoxid besteht, als Lagerwerkstoff zur Herstellung von verschleißfesten Gleitlagern.

2. Verwendung einer Kupfer-Aluminium-Legierung nach Anspruch 1 mit 5 bis 16 % Aluminium für den Zweck nach Anspruch 1.

3. Verwendung einer Kupfer-Aluminium-Legierung nach Anspruch 1 oder 2 mit 9 bis 11 % Aluminium für den Zweck nach Anspruch 1.

4. Verwendung einer Kupfer-Aluminium-Legierung nach Anspruch 1 oder 2 mit 14 bis 16 % Aluminium für den Zweck nach Anspruch 1.

5. Verwendung einer Kupfer-Aluminium-Legierung nach Anspruch 1 bis 4 mit einer Deckschicht der Dicke D = 10 nm bis 10 µm für den Zweck nach Anspruch 1.

6. Verwendung einer Kupfer-Aluminium-Legierung nach Anspruch 5 mit einer Deckschicht der Dicke D = 10 bis 100 nm für den Zweck nach Anspruch 1.

7. Verwendung einer Kupfer-Aluminium-Legierung nach einem oder mehreren der Ansprüche 1 bis 6, bei der die Deckschicht durch Glühung bei Glühtemperaturen T = 400 bis 800 °C zwischen 0,5 und 10 h in einer Gasatmosphäre mit geringem Sauerstoffpartialdruck erzeugt wird, für den Zweck nach Anspruch 1.

8. Verwendung einer Kupfer-Aluminium-Legierung nach Anspruch 7, bei der die Deckschicht durch Glühung in "technischem Wasserstoff" erzeugt wird, für den Zweck nach Anspruch 1.

## Claims

1. Use of a copper-aluminium alloy comprising from 0.01 to 20% aluminium, optionally one or more elements from the group iron, cobalt, manganese, nickel, silicon, tin up to a maximum total of 20%, optionally up to 45% zinc, the remainder being copper and usual impurities, which alloy has a thin outer cover layer of thickness D which is produced by annealing at from 400 to 800°C in a gas atmosphere with a low oxygen partial pressure and which consists exclusively of aluminium oxide, as a bearing material for the manufacture of wear-resistant slide bearings.

2. Use of a copper-aluminium alloy according to claim 1 having from 5 to 16% aluminium for the purpose according to claim 1.

3. Use of a copper-aluminium alloy according to claim 1 or 2 having from 9 to 11% aluminium for the purpose according to claim 1.

4. Use of a copper-aluminium alloy according to claim 1 or 2 having from 14 to 16% aluminium for the purpose according to claim 1.

5. Use of a copper-aluminium alloy according to claims 1 to 4 having a cover layer of thickness D = 10 nm to 10 µm for the purpose according to claim 1.

6. Use of a copper-aluminium alloy according to claim 5 having a cover layer of thickness D = 10 to 100 nm for the purpose according to claim 1.

7. Use of a copper-aluminium alloy according to one or more of claims 1 to 6, wherein the cover layer is produced by annealing at annealing temperatures T = 400 to 800°C for from 0.5 to 10 h in a gas atmosphere with a low oxygen partial pressure, for the purpose according to claim 1.

8. Use of a copper-aluminium alloy according to claim 7, wherein the cover layer is produced by annealing in "technical hydrogen", for the purpose according to claim 1.

## Revendications

1. Utilisation d'un alliage cuivre-aluminium, consistant en 0,01 à 20% d'aluminium, au choix un ou plusieurs éléments du groupe du fer, du cobalt, du manganèse, du nickel, du silicium, de l'étain jusqu'à au total, maximum 20%, au choix jusqu'à 45% de zinc, le reste étant du cuivre et les impuretés usuelles, qui présente une couche de couverture fine, externe, d'épaisseur D, produite par incandescence de 400 à 800°C dans une atmosphère de gaz avec faible pression partielle de l'oxygène, qui consiste exclusivement en oxyde d'aluminium, comme matériau anti-friction pour la préparation de paliers lisses résistant à l'usure.

2. Utilisation d'un alliage cuivre-aluminium selon la revendication 1, avec 5 à 16% d'aluminium pour l'objet selon la revendication 1.

3. Utilisation d'un alliage cuivre-aluminium selon la revendication 1 ou 2, avec 9 à 11% d'aluminium pour l'objet selon la revendication 1.

4. Utilisation d'un alliage cuivre-aluminium selon la revendication 1 ou 2, avec 14 à 16% d'aluminium pour l'objet selon la revendication 1.

5. Utilisation d'un alliage cuivre-aluminium selon la revendication 1 à 4, avec une couche de couverture d'épaisseur D = 10 nm à 10 µm pour l'objet selon la revendication 1.

6. Utilisation d'un alliage cuivre-aluminium selon la revendication 5, avec une couche de couverture d'épaisseur D = 10 à 100 nm pour l'objet selon la revendication 1.

7. Utilisation d'un alliage cuivre-aluminium selon l'une ou plusieurs des revendications 1 à 6, dans lequel la couche de couverture est produite par incandescence à des températures T = 400 à 800°C pendant 0,5 à 10 heures dans une atmosphère de gaz avec une faible pression partielle d'oxygène, pour l'objet selon la revendication 1.

8. Utilisation d'un alliage cuivre-aluminium selon la revendication 7, dans lequel la couche de couverture est produite par incandescence dans de « l'hydrogène technique », pour l'objet selon la revendication 1.
